# EUROPÄISCHE PATENTSCHRIFT

(11) **EP 0 496 077 B1**
(45) Veröffentlichungstag und Bekanntmachung des Hinweises auf die Patenterteilung: **10.04.1996**
(21) Anmeldenummer: 91121479.9
(22) Anmeldetag: 14.12.1991
(51) Int. Cl.: B28B 7/08, B28B 3/02

(54) **Vorrichtung zum Herstellen von Steinen**
Apparatus for making building blocks
Dispositif pour la fabrication de pierres

(30) Priorität: 21.01.1991 DE 4101593
(43) Veröffentlichungstag der Anmeldung: 29.07.1992
(73) Patentinhaber: Gebhart, Siegfried, D-88317 Aichstetten (DE)
(72) Erfinder: Gebhart, Siegfried, D-88317 Aichstetten (DE)
(74) Vertreter: Lorenz, Werner, Dipl.-Ing.

(56) Entgegenhaltungen:
- DE-C- 191 271
- FR-A- 579 442
- FR-A- 2 127 274
- US-A- 2 825 954
- US-A- 3 006 053
- US-A- 3 426 404

## Beschreibung

Die vorliegende Erfindung betrifft eine Vorrichtung zum Herstellen von Steinen, insbesondere von Pflastersteinen, Block- und Schalungssteinen, mit einem Materialkasten, einem Formkasten, einer Rütteleinrichtung, und mit unter dem Formkasten angeordneten Verdichtungsstempeln, wobei der Formkasten mit den Verdichtungsstempeln und einer Stempelauflage wenigstens um annähernd 180° drehbar ist, wobei der Materialkasten an einem Hauptrahmen über dem Formkasten angeordnet ist.

Bei den bekannten Vorrichtungen zum Herstellen von Steinen wird ein Formkasten mittels eines Füllwagens bzw. Materialkasten gefüllt, der von der Seite her über den Formkasten fährt und nach dem Einfüllen des Materials in den Formkasten wieder zurückfährt. Danach fährt ein Stempel von oben in den Formkasten ein und durch Vibratoren an dem Formkasten bzw. sogenannten Rüttelaggregaten wird das sich in dem Formkasten befindende Material verdichtet, woraufhin der Formkasten nach oben weggehoben wird. Die sich unter dem Formkasten befindende Platte, auf der sich die Steine befinden, wird abtransportiert. Darauf folgt der nächste Herstellvorgang.

Nachteilig dabei ist jedoch, daß bei den bekannten Vorrichtungen zum Herstellen von Steinen die Verdichtung im wesentlichen nur durch Vibration an dem Formkasten oder am unten liegenden Rüttelaggregat hergestellt werden kann. Ein zugleich stattfindender Preßvorgang ist nicht möglich, da ansonsten von der Konzeption her die Rüttelkraft zerstört wird. Zusätzlich ist eine präzise Fertigung nicht möglich, da die Steine im allgemeinen auf einem Betonboden gefertigt werden, wo keine Drücke auf die Steine gebracht werden können, da sonst die Maschine angehoben wird. Bei einer Fertigung mit einer stationären Maschine sind durch den Rüttelvorgang und durch den Preßvorgang die Höhen der Steine nicht unter Kontrolle zu bringen, d.h. es müssen Höhenunterschiede in Kauf genommen werden. Hinzu kommt, daß durch das Eintauchen des Stempels in den Formkasten gewisse Toleranzen gewährleistet werden müssen, da speziell durch die Kernhalter bei der Herstellung immer ein Grat entsteht.

Einer der Hauptnachteile der vorbekannten Vorrichtungen und Verfahren zum Herstellen von Steinen liegt darin, daß bei der Herstellung der Steine feinere Stoffe aus dem Steinherstellungsmaterial nach unten gerüttelt werden, weshalb die auf diese Weise hergestellten Steine eine grobere Oberfläche - im Vergleich zur Unterfläche - und auch keine exakten Kanten und Winkel besitzen.

Bei den bekannten Vorrichtungen zum Herstellen von Steinen ist außerdem von Nachteil, daß sie einen sehr großen Platzbedarf aufweisen.

Aus der US-A-3,006,053 ist eine Vorrichtung zum Herstellen von Steinen nach der im Oberbegriff des Anspruchs 1 definierten Art bekannt. Bei der in der genannten Druckschrift offenbarten Vorrichtung wird ein an einem feststehenden Rahmen angebrachter Tragrahmen mit allen daran angebrachten Bauteilen während des Fertigens von Steinen verschwenkt, so daß die Vorrichtung sehr aufwendig ist und, wie andere bekannte Vorrichtungen, verhältnismäßig viel Platz beansprucht.

Der vorliegenden Erfindung liegt daher die Aufgabe zugrunde, eine Vorrichtung der eingangs erwähnten Art zu schaffen, die bei geringem Platzbedarf und mit hoher Taktzeit sehr maßgenaue und gleichmäßige Steine schafft.

Erfindungsgemäß wird diese Aufgabe dadurch gelöst, daß an dem Hauptrahmen Hauptzylinder befestigt sind, an deren in vertikaler Richtung operierenden Hauptkolben über einen Tragrahmen der Formkasten befestigt ist, daß der Formkasten mit den Verdichtungsstempeln und der Stempelauflage in einem Maschinenunterteil angeordnet sind, das über ein Drehlager an dem Tragrahmen befestigt ist, und daß über Verriegelungselemente an dem Hauptrahmen angeordnete Zugzylinder mit den Verdichtungsstemplen lösbar verbindbar sind.

Ein wesentlicher Vorteil der erfindungsgemäßen Lösung ist, daß sich der Stempel grundsätzlich im bzw. unter dem Formkasten befindet und präzise hergestellt werden kann. Dadurch können problemlos Steine in den verschiedensten Höhen hergestellt werden. Je nach dem wie weit der Stempel in den Formkasten einfährt, kann der Stein höher oder niedriger hergestellt werden.

Da bei dem erfindungsgemäßen Herstellungsverfahren die spätere Steinoberseite sich unten befindet und die Verdichtungsstempel auch von unten nach oben drücken, findet auch im Unterschied zu dem Stand der Technik keine nachteilige Entmischung von Grob- und Feinstoffen statt. Im Gegenteil, während des Rüttelvorganges gelangen die Feinstoffe in den Formen des Formkastens nach unten, wodurch die auf diese Weise gebildete Oberseite des Steines sehr exakt und sauber hergestellt werden kann. So entstehen z.B. scharfe Kanten und Ecken. Ebenso können exakte Nuten und Fäden eingeformt werden, wie auch besondere Oberflächenstrukturierungen sauber und maßgenau eingeformt werden können.

Da bei der erfindungsgemäßen Vorrichtung alle Bewegungsabläufe hydraulisch betätigt werden können und mit großem Druck gearbeitet werden kann, entsteht eine entsprechende Wärme, die in einem Öltank konserviert werden kann, um anschließend Trocknungskanäle zu beheizen, in denen die Steine nach ihrer Herstellung getrocknet werden. Dies bedeutet, daß die Anlage energiesparend betrieben werden kann.

Die Vorrichtung ist auch sehr klein bzw. kompakt, d.h. platzsparend. Als Folge davon kann die Vorrichtung mit geringen Kosten schall- und wärmetechnisch abisoliert werden.

Die erfindungsgemäße Vorrichtung ist aufgrund ihrer einfachen Konzeption auf kleinem Raum sehr überschaubar.

Weiterhin befinden sich an der erfindungsgemäßen Vorrichtung fast keine mechanischen Teile. Alle Bewegungen können direkt über die Zylinder mittels SpezialSchwingmetall-Puffer übertragen werden.

Da über die Zylinder alles direkt elektronisch eingesteuert werden kann, weist die erfindungsgemäße Vorrichtung eine sehr hohe Taktzeit auf.

Durch zwischen der Rütteleinrichtung und den an der Vorrichtung angeordneten Zylindern angeordnete Schwingmetalle kann die Maschine komplett in sich schwingen, ohne daß die Zylinder in Mitleidenschaft gezogen werden. Die Rüttelkraft kann zu 100 % auf das Material aufgebracht werden. Die Zugzylinder können ebenfalls auf Schwingmetall gelagert und mit einer Schwalbenschwanzaufhängung versehen sein. Sie können mit einer Toleranz von 0,5 mm bei Zug unmittelbar eingreifen.

Die erfindungsgemäße Vorrichtung zeichnet sich des weiteren durch ihr geringes Gesamtgewicht aus.

In vorteilhafter Weise ist der Formkasten mit dem Tragrahmen lösbar verbunden, wodurch eine sehr schnelle Auswechslung des Formkastens vorgenommen werden kann, wenn andere Steine hergestellt werden sollen, womit die Anlage gezielt flexibel und schnell gesteuert werden kann.

Da der Materialkasten sich direkt über dem Formkasten befindet und kein Füllwagen bewegt wird, ist eine Entmischung des Materiales ausgeschlossen.

Weitere vorteilhafte Ausgestaltungen und Weiterbildungen der Erfindung ergeben sich aus den Unteransprüchen und dem nachfolgend anhand der Zeichnung prinzipmäßig dargestellten Ausführungsbeispiel.

Es zeigt:
- Fig. 1: Eine Seitenansicht der erfindungsgemäßen Vorrichtung, teilweise im Schnitt;
- Fig. 2: eine Seitenansicht, die 90° zur Seitenansicht nach der Fig. 1 liegt;

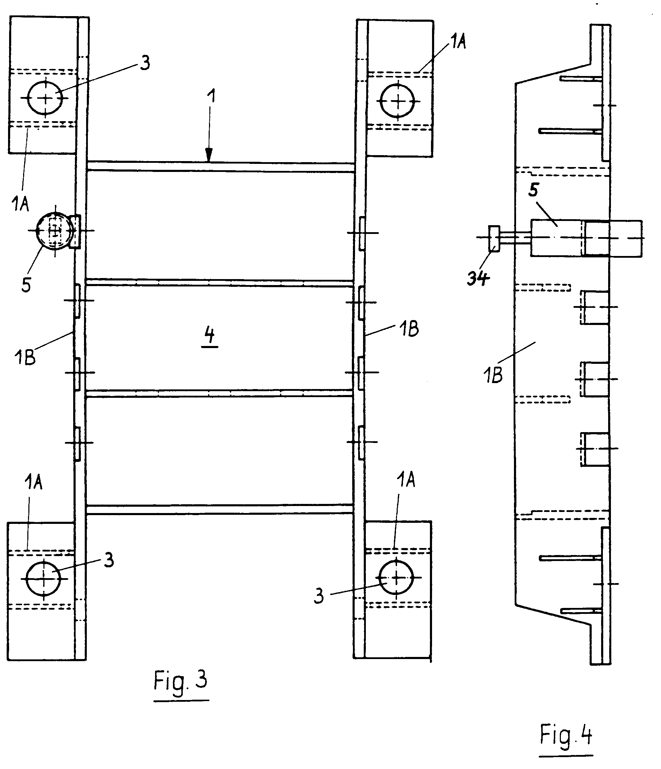

- Fig. 3: eine Draufsicht auf den Hauptrahmen;
- Fig. 4: eine Seitenansicht des in der Fig. 3 dargestellten Hauptrahmens und
- Fig. 5: eine Seitenansicht gemäß der Fig. 2 mit dem Formkasten in gedrehter Position.

Das dargestellte Ausführungsbeispiel weist einen kastenartigen Hauptrahmen 1 auf mit vier senkrechten Stützen 1A und zwei Querträgern 1B. Ein Materialkasten 4 ist im oberen Bereich des Hauptrahmes 1 zwischen den Stützen 1A und Querträgern 1B angeordnet. Die Wände des Materialkastens 4 dienen gleichzeitig zur Versteifung des Hauptrahmens. Über dem Hauptrahmen 1 ist ein verfahrbarer Materialkübel 2 angeordnet.

Auf dem Hauptrahmen 1 sind in den Eckbereichen vier Hauptzylinder 3 mit Hauptkolben 3A aufgesetzt. Ferner sind an den Querträger 1B des Hauptrahmens 1 mehrere Zugzylinder 5 angeordnet. Ebenfalls an dem Hauptrahmen 1 ist ein horizontal verschiebbares Ziehblech 6 befestigt. Unter dem Ziehblech 6 befindet sich ein Formkasten 7. Unter dem Formkasten 7 sind Verdichtungsstempel 8 angeordnet. Der Formkasten 7 ist mit Zylindern 9 für die Entschalung der Steine versehen. Unterhalb der Verdichtungsstempel 8 ist für diese eine Stempelauflage 10 angeordnet.

Zugrohre 11 stellen die Verbindung der Zugzylinder 5 zu der Stempelauflage 10 mit den Verdichtungsstempeln 8 für einen Pressvorgang her.

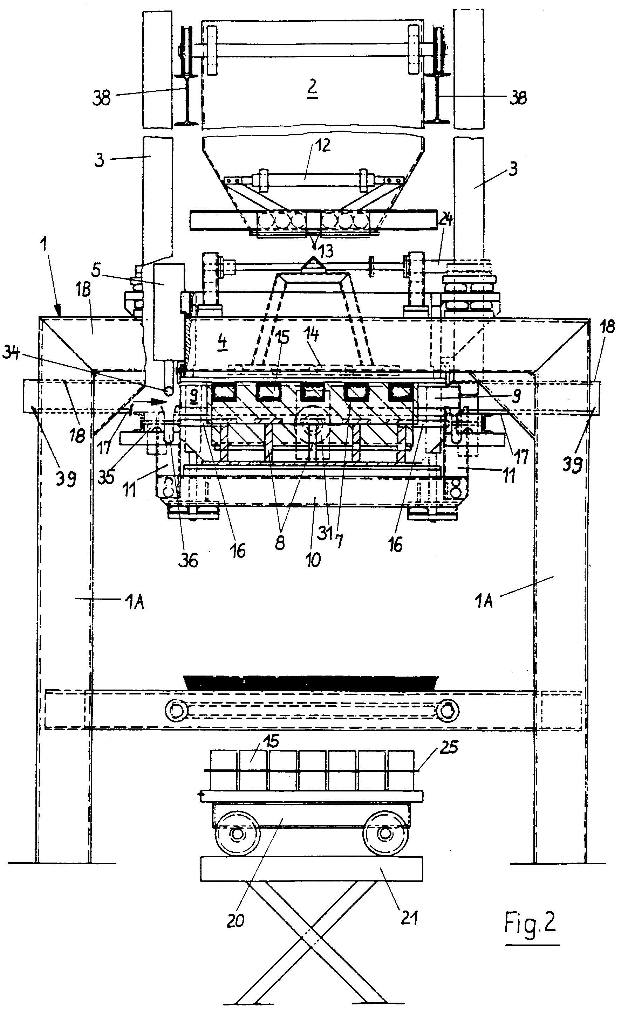

Wie am besten aus der Fig. 2 ersichtlich ist, ist die Unterseite des Materialkübels 2 durch ein horizontal verschiebbares Ziehblech 13 abgeschlossen, wobei zu dessen Verschiebung, d.h. zum öffnen und Schließen der Unterseite ein Zylinder 12 mit Betätigungshebeln vorgesehen ist.

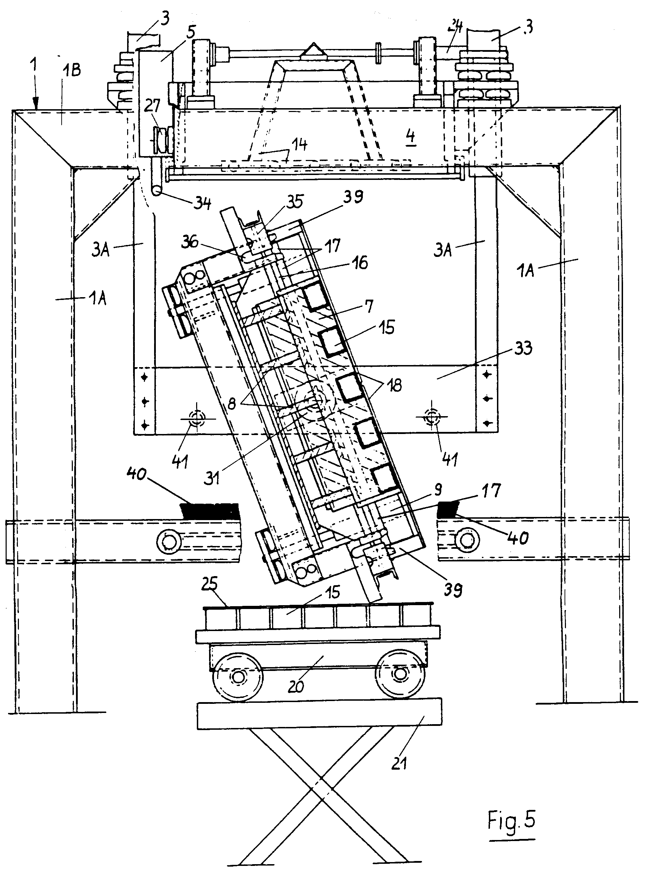

Unterhalb des Ziehbleches 13 ist im Hauptrahmen 1 ein Materialrechen 14 über dem Formkasten 7 (Fig. 2 und 5) angeordnet.

Im Formkasten 7 befinden sich Formen für Pflastersteine 15. Statt Pflastersteine 15 können selbstverständlich auch andere Steine, wie z.B. Schalungssteine oder Hohlblocksteine für Mauern, hergestellt werden.

In der Fig. 2 sind zwischen den zwei sich gegenüberliegenden Zugrohren 11 ebenfalls sich gegenüberliegende Verriegelungszylinder 16 dargestellt, die mit einer Verriegelungseinrichtung zusammenarbeiten, welche nachfolgend näher beschrieben wird.

Am Formkasten 7 sind weiterhin auch beidseits jeweils ein Zylinder 17 für eine Betätigung eines horizontal verschiebbaren zweiteiligen Formabdeckbleches 18 angeordnet. Die Verbindung der Kolbenstangen der beiden Zylinder 17 mit den jeweils dazugehörigen Formabdeckblechhälften 18 erfolgt jeweils durch vertikale Verbindungsstücke 39. Aus Platzgründen geordnet und zum öffnen des Formabdeckbleches 18 werden die Kolbenstangen jeweils nach außen bewegt, während sie in Schließstellung damit nicht über den Umfang des Formkastens 7 herausragen und damit bei dessen Drehung nicht stören.

Im unteren Bereich des Hauptrahmens 1 sind in Höhe einer Palettiereinrichtung 20 Zylinder 19 mit Kolben angeordnet. Die Kolben sind mit Bürsten 40 versehen.

Die Palettiereinrichtung 20 befindet sich auf einer Hebebühne 21 mit einem Scherenhub.

Am Hauptrahmen 1 sind zwei sich gegenüberliegende Zylinder 22 zur Betätigung des Ziehbleches 6 vom Materialkasten 4 angeordnet.

Unterhalb der Zylinder 22 befindet sich jeweils ein Zylinder 23 deren Kolben zur Säuberung der Formkastenoberfläche jeweils mit einem Abstreifgummi versehen sind.

Wie am besten aus der Fig. 2 und 5 ersichtlich ist, befindet sich oberhalb des Materialrechens im Hauptrahmen 1 ein Zylinder 24 mit einem Kolben zu dessen Betätigung.

Auf der Palettiereinrichtung 20 ist jeweils zwischen zwei übereinanderliegenden Reihen von Pflastersteinen 15 ein Zwischenblech 25 mit Belüftungsöffnungen angeordnet.

Unterhalb des Materialkastens 4 ist ein Motor 26 für einen Rüttelantrieb 30 angeordnet, der durch Schwingmetalle 27 und 27a von den Zylindern der Vorrichtung abgetrennt ist, um deren Beschädigungen und Verschleiß zu vermeiden.

Im Bereich des Schwingmetalles 27a befindet sich ein Seitenrahmen 29. Am Seitenrahmen 29 ist der Formkasten 7 auswechselbar befestigt.

Der Formkasten 7 befindet sich in einem komplett drehbaren Maschinenunterteil, das auch die Verdichtungsstempel 8, den Zylinder 9 für die Entschalung der Steine, die Stempelauflage 10, die Zugrohre 11, die Zylinder 16 und 17 für die Verriegelung mit den Zugzylindern 5 und für das Formabdeckblech, das Formabdeckblech 18 selbst, den Motor 26 mit den Schwingmetallen 27 und den Seitenrahmen 29 aufweist. Die beiden Drehlager 31 für das Maschinenunterteil befinden sich jeweils in einem Tragrahmen 33, der jeweils mit zwei sich gegenüberliegenden Hauptkolben 3A der Hauptzylinder 3 verbunden ist (siehe insbesonders Fig. 5).

An die Hauptzylinder 3 schließen sich im unteren Bereich Hauptkolben 32 an, die jeweils an einem Tragrahmen 33 angeordnet sind.

Der Produktionsablauf ist folgendermaßen:
In den Materialkübel 2 wird von einer Mischanlage aus Material eingefüllt. Anschließend fährt er auf Fahrschienen 38 über den Hauptrahmen 1 und befindet sich damit über dem stationären Materialkasten. Durch Betätigung des Zylinders 12, wodurch das Ziehblech 13 zurückgezogen wird, wird die Materialmenge in den Materialkasten 4 präzise eindosiert.

Durch Betätigen des Zylinders 24 für den Materialrechen 14 und durch Bewegen des Materialrechens 14 wird bei zurückgezogenem Ziehblech 6 Material in die Formen des Formkastens 7 eingefüllt. Das Material ergibt dann den Pflasterstein bzw. Hohl- oder Schalungsstein 15.

Wenn das Material eingefüllt ist, fährt das Ziehblech 6 wieder zu. Durch Hartmetallsegmente am unteren Bereich des Formkastens 7 kann dabei ein Verschleiß durch das Ein- und Ausfahren eines Ziehbleches verhindert werden. Danach fahren die Hauptkolben 3A der Hauptzylinder 3 über den Tragrahmen 33 den Formkasten 7 mit der Stempelauflage 10 und dem Zylinder für Entschalung 9, dem Zugrohr 11 sowie dem Verdichtungsstempel 8 und der Seitenrahmen 29 einige Zentimeter nach unten.

Anschließend fahren die Kolben der Zylinder 23, die beidseitig mit Gummiabstreifern bestückt sind, unter das Ziehblech 6 und streifen die Oberkante des Formkastens 7 und das Ziehblech 6 von sämtlichen Betonresten präzise und sauber ab, damit die Fläche glatt ist.

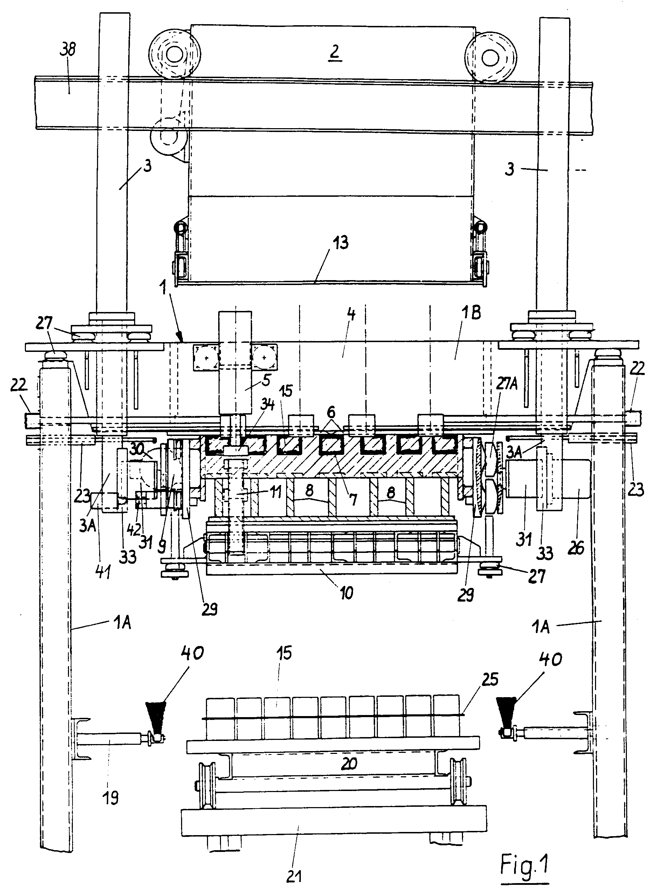

Nachdem dieser Vorgang beendet ist, fahren die Kolben 3A der Hauptzylinder 3 den Formkasten 4 wieder an das Ziehblech 6 heran. Die vier Zugzylinder 5, die an jedem der beiden Querträger 1B angeordnet sind, greifen über deren Kolben in die Zugrohre 11 (aus Übersichtlichkeitsgründen ist in der Fig. 1 nur ein Zugzylinder 5 und ein Zugrohr 11 dargestellt) ein. Die Verriegelung der acht Zugzylinder 5 mit den acht Zugrohren 11 des Formkastens 7 wird durch die Kolbenstangen der Verriegelungszylinder 16 geschlossen. Hierzu sind die Zugrohre jeweils mit vertikalen schlitzartigen Aussparungen 36 versehen, deren Öffnung sich oben befindet. Seitlich neben den Aussparungen 36 befindet sich jeweils ein Riegel 35, der mit der Kolbenstange des dazugehörigen Verriegelungszylinders 16 versehen ist. Die Enden der Kolbenstangen der Zugzylinder 5 sind mit einem Querstück oder einem Haken 34 versehen (siehe Fig. 1 und 2). Zur Verriegelung fahren nun die Kolbenstangen der Zugzylinder 5 mit ihren Haken 34 nach unten in die schlitzartigen Aussparungen 36. Anschließend werden die Kolbenstangen der Verriegelungszylinder 16 mit den daran befestigten Riegeln 35 zurückgezogen (in der Zeichnung nach der Fig. 2 nach rechts), wodurch die schlitzartigen Aussparungen 36 oben abgeschlossen werden, wobei sich die Haken 34 damit unter den Riegeln 35 befinden.

Anschließend ziehen die Kolbenstangen der Zugzylinder 5 die Verdichtungsstempel 8 zusammen mit der Stempelauflage 10 mit ca. 400 Tonnen nach oben bei gleichzeitigem Einsatz der Rütteleinrichtung 30 gegen das Material 15 und pressen gegen das Ziehblech 6, das sich am Hauptrahmen 1 abstützt.

Der Formkasten 7, der Verdichtungsstempel 8, der Zylinder für Entschalung 9, die Stempelauflage 10, das Zugrohr 11, der Seitenrahmen 29 und die Hauptzylinder 3 mit den Schwingungsmetallen 27 stellen ein in sich wieder freischwingendes Element dar.

Um die Verdichtung zu verbessern kann die Stempelauflage 10 mit dem Verdichtungsstempel 8 unter dem Vibrations- und Druckvorgang der Stempel kurz entlastet und wieder angezogen werden, damit das feine Material des Betons zur Erzeugung einer sauber und fein strukturierten Oberfläche des zu formenden Steines 15 in den unteren Bereich gelangen kann. Im weiteren Herstellungsablauf fahren die Kolben der Hauptzylinder 3 mit den komplett drehbaren Maschinenunterteil nach unten. Bei diesem Hydraulikvorgang wird das Maschinenunterteil komplett mit dem Formkasten 7 um 180° gedreht. Zur selben Zeit werden die Formabdeckbleche 18 durch die Kolben der Zylinder 17 über die verdichteten Steine geschoben, damit sie bei der hohen Drehgeschwindigkeit nicht durch Fliehkraft herausfallen können (siehe Fig. 5).

Kurz nachdem der Drehvorgang beendet ist und das Maschinenunterteil wieder horizontal, aber um 180° verdreht steht, werden die Formabdeckbleche 18 durch die Kolben der Zylinder 17 nach außen gefahren.

Nach diesem Vorgang werden durch die Kolben der Zylinder 9 die Stempelauflage 10 und die Verdichtungsstempel 8 die Steine "nach unten gedrückt". Im gleichen Moment geht die Hebebühne 21, die sich genau darunter befindet, in Stärke der Steinhöhe nach unten und die Steine 15 sind entschalt.

Zur selben Zeit fährt auch das komplette Maschinenunterteil nach oben und wird durch die Bürsten 19 unten kurz gereinigt. Nach einem weiteren "nach oben fahren" beginnt der Drehvorgang "nach rückwärts". Zur gleichen Zeit wird durch ein Vakuumgerät eine mit Ventilationslöchern versehene Kunststoffplatte als Zwischenblech 25 auf die frische Steinreihe gelegt. Die Zwischenplatte 25 dient als Distanzhalter und verhindert das Zusammenkleben der Steine im frischen Zustand. Die Ventilationslöcher sind eingebracht, damit die Hydrationswärme das ganze fertige Paket zu einem schnelleren Abbindeprozess führt.

Nachdem der Rückwärtsdrehvorgang beendet ist fährt der Formkasten nach oben, und der eben beschriebene Vorgang wiederholt sich.

Damit das schwenkbare Maschinenunterteil, bei dem der Formkasten 7 den Kern bildet, nach einem Drehvorgang wieder in eine exakte horizontale Lage gebracht wird, sind zusätzlich noch Positionier- und Arretierglieder vorgesehen. Diese können z.B. vier Positionierzylinder 41 aufweisen, die an dem Tragrahmen 33 befestigt sind. Die Kolbenstangen der Positionierzylinder 41 sind dabei jeweils mit einer angedrehten oder konisch zulaufenden Spitze versehen. Nach einem Drehvorgang fahren diese Kolbenstangen dann jeweils in ebenfalls kegelig angedrehte Positionierbuchsen 42. Die Positionierbuchsen 42 sind über Schwingmetalle an dem Seitenrahmen 29 angeordnet. Aus Übersichtlichkeitsgründen sind die Positionierzylinder 41 und die Positionierbuchsen 42 nur in den Figuren 1 und 5 angedeutet. Wenn die Kolbenstangen der Positionierzylinder 41 in den Positionierbuchsen 42 eingerastet sind, ist jeweils eine exakte horizontale Lage des Maschinenunterteiles gegeben. Zum Verschwenken müssen die Kolbenstangen lediglich zurückgezogen werden.

Sehr von Vorteil ist es überdies, daß sich durch die hohen auf das Material aufbringbaren Drücke (ca. 400 Tonnen und z.B. 12 Vibratoren mit ca. 18.000 kg Rüttelkraft) eine optimale Verdichtung ergibt. Dies bedeutet eine Zementeinsparung von ca. 20 - 25 %.

Ist eine gewünschte Anzahl von Steinreihen auf dem Palettierwagen 20 abgelegt, wird die Hebebühne 21 abgesenkt und der Palettierwagen 20 weggefahren und durch einen neuen leeren Palettierwagen ersetzt. Zum Trocknen der Steine kann der Palettierwagen 20 in üblicher Weise in einen Trockentunnel oder einen Trockenofen eingefahren werden.

## Patentansprüche

1. Vorrichtung zum Herstellen von Steinen, insbesondere von Pflastersteinen, Block- und Schalungssteinen, mit einem Materialkasten (4), einem Formkasten (7), einer Rütteleinrichtung (30), und mit unter dem Formkasten (7) angeordneten Verdichtungsstempeln (8), wobei der Formkasten (7) mit den Verdichtungsstempeln (8) und einer Stempelauflage (10) wenigstens um annähernd 180° drehbar ist, wobei der Materialkasten (4) an einem Hauptrahmen (1) über dem Formkasten (7) angeordnet ist,
**dadurch gekennzeichnet,** daß
an dem Hauptrahmen (1) Hauptzylinder (3) befestigt sind, an deren in vertikaler Richtung operierenden Hauptkolben (3a) über einen Tragrahmen (33) der Formkasten (7) befestigt ist, daß der Formkasten (7) mit den Verdichtungsstempeln (8) und der Stempelauflage (10) in einem Maschinenunterteil angeordnet sind, das über ein Drehlager (31) an dem Tragrahmen (33) befestigt ist, und daß über Verriegelungselemente (16,34 , 35,36) an dem Hauptrahmen (1) angeordnete Zugzylinder (5) mit den Verdichtungsstempeln (8) lösbar verbindbar sind.

2. Vorrichtung nach Anspruch 1,
**dadurch gekennzeichnet,** daß
Schwingmetalle (27, 27A) zwischen der Rütteleinrichtung (30) und den an der Vorrichtung angeordneten Zylindern (5,9,16,17) angeordnet sind.

3. Vorrichtung nach Anspruch 1 oder 2,
**dadurch gekennzeichnet,** daß
über dem Materialkasten (4) ein verfahrbarer Materialkübel (2) angeordnet ist.

4. Vorrichtung nach Anspruch 1 oder 2,
**dadurch gekennzeichnet,** daß
an dem Hauptrahmen horizontal über dem Formkasten (7) wenigstens ein verschiebbares Ziehblech (6) befestigt ist, an dem sich der Formkasten (7) beim Preßvorgang abstützt.

5. Vorrichtung nach einem der Ansprüche 1 bis 3,
**dadurch gekennzeichnet,** daß
der Formkasten (7) mit einem Formabdeckblech (18) abdeckbar ist und das Formabdeckblech (18) zweiseitig und durch seitlich am Formkasten (7) angeordnete Zylinder (17) mit Kolbenstangen verschiebbar ist.

6. Vorrichtung nach Anspruch 1,
**dadurch gekennzeichnet,** daß
die Verriegelungseinrichtung zwischen der Stempelauflage (10) und dem Formkasten (7) mit den Kolben der Zugzylinder (5) zusammenarbeitende Riegel (35) und eine schlitzartige Aussparung, in die die Riegel (35) einrasten, aufweist.

7. Vorrichtung nach einem der Ansprüche 1 bis 6,
**dadurch gekennzeichnet,** daß
an dem Tragrahmen (33) und dem Formkasten (7) oder einem mit dem Formkasten verbundenen Teil (Seitenteil 29) Positionier- und Arretierglieder (41,42) angeordnet sind.

8. Vorrichtung nach Anspruch 1,
**dadurch gekennzeichnet,** daß
unter dem Formkasten (7) eine Palettiereinrichtung (20,21) angeordnet ist, die einen Palettierwagen (20) aufweist, der auf einer Hebebühne (21) angeordnet ist.

9. Vorrichtung nach Anspruch 8,
**dadurch gekennzeichnet,** daß
auf der Palettiereinrichtung (20) mehrere Reihen von Steinen (15) übereinander setzbar sind, wobei jeweils zwischen übereinander liegenden Steinreihen ein mit Löchern, Perforationen, Durchbrechungen oder dergleichen versehenes Zwischenblech (25) angeordnet ist.

10. Vorrichtung nach Anspruch 1,
**dadurch gekennzeichnet,** daß
die Wände des Materialkastens (4) Versteifungselemente des Hauptrahmens (1) sind.

## Claims

1. Apparatus for making blocks, in particular paving blocks, building blocks and formwork blocks, comprising a material hopper (4), a moulding box (7), a vibrating device (30) and compacting rams (8) arranged under the moulding box (7), the moulding box (7) together with the compacting rams (8) and a ram support (10) being rotatable through at least approximately 180°, the material hopper (4) being arranged on a main frame (1) above the moulding box (7), characterised in that main cylinders (3) are secured to the main frame (1), the moulding box (7) being secured to the main pistons (3a) thereof operating in the vertical direction via a supporting frame (33), that the moulding box (7) together with the compacting rams (8) and the ram support (10) are arranged in a lower part of the machine secured to the supporting frame (33) via a pivot bearing (31) and that pull-action cylinders (5) arranged on the main frame (1) can be removably connected to the compacting rams (8) via locking elements (16, 34, 35, 36).

2. Apparatus according to claim 1, characterised in that rubber-metal anti-vibration mountings (27, 27A) are arranged between the vibrating device (30) and the cylinders (5, 9, 16, 17) arranged on the apparatus.

3. Apparatus according to claim 1 or claim 2, characterised in that a movable material bucket (2) is arranged above the material hopper (4).

4. Apparatus according to claim 1 or claim 2, characterised in that at least one displaceable drawing sheet (6) is secured to the main frame horizontally above the moulding box (7), against which the moulding box (7) is supported during the pressing process.

5. Apparatus according to one of claims 1 to 3, characterised in that the moulding box (7) can be covered with a mould cover plate (18) and the mould cover plate (18) is displaceable in both directions by means of cylinders (17) with piston rods arranged laterally on the moulding box (7).

6. Apparatus according to claim 1, characterised in that the locking device between the ram support (10) and the moulding box (7) comprises bolts (35) cooperating with the pistons of the pull-action cylinders (5) and a slot-shaped recess in which the bolts (35) engage.

7. Apparatus according to one of claims 1 to 6, characterised in that positioning and stop members (41, 42) are arranged on the supporting frame (33) and the moulding box (7) or on a part connected to the moulding box (side part 29).

8. Apparatus according to claim 1, characterised in that a palletising device (20, 21) is arranged under the moulding box (7), comprising a pallet truck (20) arranged on a lifting platform (21).

9. Apparatus according to claim 8, characterised in that several rows of blocks (15) can be stacked on the palletising device (20), an intermediate sheet (25) provided with holes, perforations, openings or the like being arranged between rows of blocks lying one on top of the other.

10. Apparatus according to claim 1, characterised in that the walls of the material hopper (4) are stiffeners for the main frame (1).

## Revendications

1. Dispositif pour la fabrication de pierres, notamment de pavés, de blocs et de pierres de coffrage, comportant un réservoir (4) de matière première, un châssis (7) de moulage, un dispositif vibreur (30) et des vérins compacteurs (8) disposés sous le châssis de moulage (7), dans lequel le châssis de moulage (7) et les vérins compacteurs (8) ainsi qu'un support (10) pour lesdits vérins, sont au moins approximativement rotatifs de 180°, dans lequel le réservoir de matière première (4) est monté sur un châssis principal (1) au-dessus du châssis de moulage (7), **caractérisé** en ce que le châssis principal (1) porte des vérins principaux (3) dont des pistons principaux (3a) mobiles verticalement sont fixés à un cadre porteur (33) du châssis de moulage (7), en ce que le châssis de moulage (7) ainsi que les vérins compacteurs (8) et le support (10) pour ces vérins sont disposés dans un bâti inférieur de machine qui est fixé au cadre porteur (33) par l'intermédiaire d'un palier (31), et en ce que des vérins de traction (5) montés sur le châssis principal (1) peuvent être accouplés de façon amovible aux vérins compacteurs (8) par l'intermédiaire d'éléments de verrouillage (16, 34, 35, 36).

2. Dispositif selon la revendication 1,
**caractérisé** en ce que des éléments amortisseurs (27, 27A) sont disposés entre le dispositif vibreur (30) et les vérins (5, 9, 16, 17) solidaires du dispositif.

3. Dispositif selon la revendication 1 ou 2,
**caractérisé** en ce qu'il comporte une benne mobile (2) située au-dessus du réservoir de matière première (4).

4. Dispositif selon la revendication 1 ou 2,
**caractérisé** en ce que le châssis principal comporte au moins une tôle d'emboutissage (6) mobile en translation, disposé horizontalement au-dessus du châssis de moulage (7) et agencé pour servir d'appui au châssis de moulage (7) pendant le processus de pressage.

5. Dispositif selon les revendications 1 à 3,
**caractérisé** en ce que le châssis de moulage (7) peut être recouvert d'une tôle de couverture (18), et en ce que cette tôle de couverture (18) est à double face et peut être déplacée par des vérins (17) pourvus de tiges de pistons et fixés latéralement au châssis de moulage (7).

6. Dispositif selon la revendication 1,
**caractérisé** en ce que le dispositif de verrouillage monté entre le support des vérins compacteurs (10) et le châssis de moulage (7) comporte des verrous (35) actionnés par les pistons des vérins de traction (5) et un évidement en forme de fente dans laquelle s'engagent lesdits verrouss (35).

7. Dispositif selon les revendications 1 à 6,
**caractérisé** en ce qu'il comporte des organes de positionnement et d'arrêt (41, 42) solidaires du cadre porteur (33) et du châssis de moulage (7) ou d'une pièce (pièce latérale 29) liée à ce châssis de moulage.

8. Dispositif selon la revendication 1,
**caractérisé** en ce qu'une installation de palettisation (20, 21) est disposée sous le châssis de moulage (7), cette installation comportant un chariot à palettes (20) monté sur une plate-forme (21)

9. Dispositif selon la revendication 8,
**caractérisé** en ce que l'installation de palettisation (20) est agencée pour recevoir plusieurs rangées de pierres (15) superposées, une tôle intermédiaire (25) comportant des trous, des perforations, des entailles ou similaires, étant interposée entre les rangées superposées.

10. Dispositif selon la revendication 1,
**caractérisé** en ce que les parois réservoir de matière première (4) sont constituées par des éléments raidisseurs du châssis principal (1).
